# EUROPÄISCHE PATENTSCHRIFT

(11) **EP 2 265 388 B1**
(45) Veröffentlichungstag und Bekanntmachung des Hinweises auf die Patenterteilung: **25.11.2015**
(21) Anmeldenummer: 09712048.9
(22) Anmeldetag: 16.02.2009
(51) Int. Cl.: B05B 12/00, B05B 12/14, H02J 7/02

(54) **REINIGUNGSVORRICHTUNG**
CLEANING DEVICE
DISPOSITIF DE NETTOYAGE

(30) Priorität: 20.02.2008 DE 102008010223
(43) Veröffentlichungstag der Anmeldung: 29.12.2010
(73) Patentinhaber: WashTec Holding GmbH, 86153 Augsburg (DE)
(72) Erfinder: AUER, Robert, 86391 Stadtbergen (DE)
(74) Vertreter: Charrier, Rapp & Liebau
(86) Internationale Anmeldenummer: PCT/EP2009/051805
(87) Internationale Veröffentlichungsnummer: WO 2009/103685

(56) Entgegenhaltungen:
- EP-A- 1 022 840
- DE-C1- 4 105 614

## Beschreibung

Die Erfindung betrifft eine Reinigungsvorrichtung nach dem Oberbegriff des Anspruchs 1.

Siehe hierzu als nächsten Stand der Technik DE 4 105 614. In Selbstbedienungs-Waschanlagen (SB-Waschanlagen) reinigen Fahrzeugbesitzer ihr Fahrzeug selbst, so dass kein Bedienpersonal benötigt wird. Die Fahrzeugreinigung erfolgt üblicherweise mit einer an sich bekannten Reinigungslanze, wie beispielsweise in der DE 698 12 064 T2 offenbart. Mit der Reinigungslanze wird in einem ersten Schritt Reinigungsflüssigkeit, in der Regel mit Waschchemikalien versetztes Wasser, auf die Fahrzeugoberflächen aufgesprüht. Nach einer kurzen Einwirkzeit wird dann die Reinigungsflüssigkeit dann mit unter Hochdruck stehendem enthärtetem Wasser aus der Reinigungslanze von den Fahrzeugoberflächen abgespritzt, wodurch aufgeweichte Schmutzpartikel mit entfernt werden. Die Auswahl und Anzeige des Waschprogramms sowie die Einleitung und Anzeige der einzelnen Waschschritte wird in der Regel an einem zentralen Bedienautomat vorgenommen, in den Münzen eingeworfen werden können, um den Waschvorgang zu starten. Um den jeweils nächsten Waschschritt einzustellen, muss der Benutzer zum Bedienautomat gehen, unabhängig davon, wo er sich gerade befindet.

Um diesen Nachteil zu überwinden, wurden Reinigungsvorrichtungen bereitgestellt, bei denen die Anzeige bzw. die Einstellung von Waschparametern bzw. Waschschritten an der Reinigungslanze selbst erfolgt. Diese weist hierzu eine Elektronik auf, welche eine Anzeige betreibt und eingegebene Befehle über Kabel oder auch funkgestützt an die Steuerung der Waschanlage überträgt oder Signale von dort empfängt. Hierdurch wird die Bedienung der Reinigungsvorrichtung vereinfacht und der Waschvorgang kann schneller und ohne umständliches Zurücklaufen zum Bedienautomat durchgeführt werden. Ein Problem bei derartigen Reinigungslanzen bereitet jedoch die Versorgung der Elektronik in der Reinigungslanze mit elektrischer Energie.

Eine gängige Lösung der Energieversorgung ist der Einsatz von Batterien oder Akkumulatoren in der Reinigungslanze. So offenbart die DE 27 24 283 A1 eine Spritzeinrichtung für Reinigungsgeräte, wobei ein an der Spritzeinrichtung vorgesehener Sender durch eine in der Spritzeinrichtung angeordnete Batterie oder Akkumulator versorgt wird.

Bei der Reinigungspistole der DE 103 06 660 D3 wird ein Funksender in der Reinigungspistole aus einer Batterie mit Energie versorgt.

Die EP 1 281 444 A1 offenbart eine Flüssigkeitsabgabeeinrichtung für ein Hochdruckreinigungsgerät mit einer Handspritzpistole. In der Handspritzpistole ist ein Drucksensor zur Messung des Drucks der in der Flüssigkeitsleitung der Einspritzpistole fließenden Reinigungsflüssigkeit angeordnet, der u.a. einen elektrischen Messwertgeber, eine zugeordnete elektrische Schaltung und eine Druckanzeigeeinrichtung enthält. Um diese mit elektrischer Energie zu versorgen, ist ihnen eine auswechselbare Batterie zugeordnet.

Die EP 1 426 049 B1 offenbart eine Sicherheits-Waschlanze mit einer Sicherheitseinrichtung mit einem berührungsempfindlichen Sensor am Handgriff der Sicherheits-Waschlanze. Der Sensor erkennt, ob der Handgriff von der Hand des Benutzers umfasst wird. Versorgt wird diese Sicherheitsvorrichtung durch eine Energieversorgung in Form von Batterien oder Akkumulatoren im Griffteil der Reinigungslanze. Eine Ladezustandsüberwachung für die Energieversorgung generiert bei Unterschreiten eines vorgebbaren Mindestladezustands ein Alarmsignal und unterbindet die Inbetriebnahme der Waschlanze bzw. schaltet die Waschlanze im Betrieb ab. Durch das Alarmsignal wird das Wartungspersonal darauf aufmerksam gemacht, dass die Batterie bzw. der Akkumulator ausgetauscht werden müssen.

Die DE 203 07 272 U1 offenbart eine Hochdruckspritzpistole mit einem Ventil zuum Öffnen un Schließen eines Flüssigkeitsausgangs, wobei das Ventil durch einen elektrischen Antrieb betätigbar ist. Der elektrische Antrieb wird über einen an das Griffteil ansetzbaren Akku mit elektrischer Energie versorgt. Fällt die Spannung respektive Kapazität des Akkus unter einen vorgegebenen Grenzwert, kann dieser ausgetauscht werden.

Sämtliche dieser bekannten Reinigungslanzen weisen den Nachteil auf, dass nach einer bestimmten Zeit der Ladezustand der Batterien bzw. Akkumulatoren nicht mehr ausreicht, um die für den Betrieb der Reinigungslanze notwendige elektrische Energie bereitzustellen. Tritt dieser Fall ein, so müssen üblicherweise die Batterien bzw. Akkumulatoren vom Bedienpersonal der Fahrzeugwaschanlage ausgetauscht werden. Hierzu weisen die Reinigungspistolen ein von außen zugängliches Batteriefach auf. Dieses muss aufgrund der feuchten Umgebung bei der Benutzung der Reinigungslanze feuchtigkeitsdicht ausgeführt sein, um ein Eindringen von Feuchtigkeit während der Bedienung der Reinigungslanze und hierdurch verursachte Korrosion und Kurzschlüsse in den elektrischen oder elektronischen Einheiten der Reinigungslanze sicher zu verhindern. Auch muss beim Batterietausch darauf geachtet werden, dass keine Flüssigkeit oder Feuchtigkeit in das Batteriefach gelangt.

Insbesondere abends oder an Samstagen, wenn viele Fahrzeugbesitzer ihre Fahrzeuge waschen, sind die Reinigungslanzen fast ununterbrochen in Betrieb, so dass die Batterien bzw. Akkumulatoren stark beansprucht werden und gegebenenfalls ausgetauscht werden müssen. Hierzu muss vom Waschanlagenbetreiber Bedienpersonal vorgehalten werden, was bei SB-Waschanlagen aber unerwünscht ist. Wird jedoch der Betrieb der Waschanlage durch entladene Batterien bzw. Akkumulatoren aufgrund nicht erfolgten Batterietauschs unterbrochen, so entgehen dem Waschanlagenbetreiber beträchtliche Umsätze.

Als Lösung hierfür wird in der EP 1 526 049 B1 vorgeschlagen, Batterien mit einer Lebensdauer von 5 bis 10 Jahren zu verwenden, welche aufgrund der langen Lebensdauer in den Handgriff der Reinigungslanze vergossen werden können. Wenn die Batterien nach dieser Zeit erschöpft sind, wird die gesamte Elektronikeinheit der Reinigungslanze ausgewechselt. Hierdurch fällt die Reinigungslanze vollständig aus, es muss folglich stets eine Ersatzlanze oder zumindest eine Ersatz-Elektronikeinheit vorgehalten werden. Zudem sind solche langlebigen Batterien sehr teuer.

Um die mit dem Batterietausch verbundenen Nachteile zu überwinden, schlägt die DE 41 05 614 C1 vor, dass eine in der Spritzpistole enthaltene Batterie aufladbar ist und sich zudem in der Spritzpistole ein Generator zur Erzeugung einer Batterieladespannung befindet, der von der die Spritzpistole durchströmenden Flüssigkeit angetrieben ist. Hierzu können beispielsweise die kinetische Strömungsenergie zur Bewegung eines Generators, die Druckschwankungen der Flüssigkeit zur unmittelbaren Spannungserzeugung oder zur Bewegung von den Generator antreibenden Teilen, die Temperatur der Flüssigkeit und andere physikalischer Effekte, mit denen es gelingt, aus dem strömenden Flüssigkeitsstrahl Energie zur Erzeugung einer elektrischen Speisespannung für die Batterie zu gewinnen, ausgenutzt werden. Die in der Spritzpistole erzeugte Energie reicht in der Regel dazu aus, beispielsweise einen Hochfrequenzsender oder ähnliches mit Spannung zu versorgen. Hierdurch wird die Spritzpistole unabhängig von einer externen Versorgungsspannung. Ein Nachteil dieser Lösung ist, dass ein Ladevorgang der Batterie nur während der relativ kurzen Zeiten, während mit der Spritzpistole gespritzt wird, erfolgen kann. Wird die Spritzpistole jedoch längere Zeit nicht mehr betrieben, beispielsweise an Sonn- und Feiertagen, so wird die Batterie nicht geladen. Falls die Batterie den für den Betrieb der elektrischen Einheiten der Spritzpistole notwendigen Ladezustand unterschreitet, z.B. durch Selbstentladung bei großer Kälte, kann die Spritzpistole gar nicht mehr in Betrieb genommen werden, so dass auch die Batterie nicht mehr geladen werden kann.

Aus weiterem Stand der Technik ist es bekannt, die Akkus von elektrisch betriebenen Handgeräten wie Rasenmäher, Akkuschrauber (US 2006/0087282), elektrische Zahnbürsten (DE 26 08 458 A1), tragbare Telefone (DE 10 2005 045 360 A1) oder Barcodescanner (US 5.070,293) von außen wieder aufladbar zu gestalten. Allerdings liegen die dort gezeigten Vorrichtungen auf Fachbereichen, die sich deutlich vom Fachbereich der Reinigungsvorrichtungen in Fahrzeugwaschanlagen unterscheiden. Insbesondere unterscheiden sich im Bereich Fahrzeugwaschanlagen die Anforderungen an Wartungsfreiheit, hohe Verfügbarkeit, Ausfallsicherheit, Robustheit in der Handhabung sowie Kapselung gegen die feuchte Umgebung der Reinigungsvorrichtung deutlich von den oben genannten bekannten Anwendungen.

Der Erfindung liegt deshalb die Aufgabe zugrunde, die oben genannten Nachteile zu überwinden und eine Reinigungsvorrichtung zu schaffen, welche die Versorgung der Reinigungslanze mit elektrischer Energie zuverlässig und auf einfache Weise sicherstellt.

Die Erfindung löst diese Aufgabe durch eine Reinigungsvorrichtung mit den Merkmalen des Anspruchs 1. Vorteilhafte Ausgestaltungen und zweckmäßige Weiterbildungen der Erfindung sind in den Unteransprüchen angegeben.

Die erfindungsgemäße Reinigungslanze ist dadurch gekennzeichnet, dass die Reinigungsvorrichtung eine elektrische Energieübertragungseinheit zum berührungslosen, insbesondere induktiven Übertragen von elektrischer Energie zwischen der Haltevorrichtung und der Ladevorrichtung der Reinigungslanze für das Aufladen des Energiespeichers aufweist. Hierdurch kann die Ladung des Energiespeichers, bevorzugt ein Akkumulator, immer dann erfolgen, wenn die Lanze nicht in Betrieb ist. Hierdurch können längere Stillstandszeiten problemlos überwunden werden, ohne dass die Ladung des Energiespeichers zu stark nachlässt. Die Energieübertragung ist vorliegend im Sinne der Starkstromtechnik zu verstehen, welche die Übertragung möglichst hoher Energie bzw. Leistung mit hohem Nutzungsgrad zum Ziel hat, und nicht im Sinne der Nachrichtentechnik, welche eine möglichst gute Signalübertragung zum Ziel hat. So wäre es mit der bekannten Funkübertragung bei Reinigungslanzen nicht möglich, die zur Aufladung des Akkumulators der Reinigungslanze notwendige Energie bereitzustellen.

In einer vorteilhaften Ausführung der Erfindung ist die Energieübertragungseinheit ein Transformator mit einer an der Haltevorrichtung angeordneten Primärspulenwicklung und einer an der Reinigungslanze angeordneten Sekundärspulenwicklung. Die Primär- und/oder Sekundärspulenwicklung sind vorteilhaft in ein Kunststoffgehäuse vergossen, so dass sie robust und feuchtigkeitsgeschützt sind.

Eine bevorzugte Ausführung der Erfindung kann eine Kopplungsvorrichtung aufweisen, welche die in die Haltevorrichtung eingesteckte Reinigungslanze in einer Kopplungsstellung hält, in der eine gute magnetische Kopplung zwischen Primärspulenwicklung und Sekundärspulenwicklung besteht. Hierdurch kann sichergestellt werden, dass eine effektive Energieübertragung und somit eine schnelle und verlustarme Ladung des Energiespeichers erfolgt. In einer besonders platzsparenden Variante der Kopplungsvorrichtung umfasst diese die Primärspulenwicklung und/oder die Sekundärspulenwicklung.

Eine zweckmäßige Ausführung der Kopplungsvorrichtung weist einen ersten Anschlag an der Haltevorrichtung und einen zweiten Anschlag an der Reinigungslanze auf, wobei die Anschläge die Reinigungslanze in der Kopplungsstellung in der Haltevorrichtung halten. Hierdurch kann auf einfachem Weg eine gute magnetische Kopplung sichergestellt werden. Werden der erste Anschlag durch die Primärspulenwicklung und der zweite Anschlag durch die Sekundärspulenwicklung gebildet, wird eine sehr kompakte Kopplungsvorrichtung bereitgestellt.

In einer Fortbildung der Reinigungsvorrichtung ist eine Einführhilfe zum Einführen der Reinigungslanze in die Haltevorrichtung zur Kopplungsstellung vorgesehen. Hierdurch wird sichergestellt, dass der Benutzer die Reinigungslanze nach der Benutzung besonders zuverlässig und schnell in die Koppelstellung bringen kann. Dies gilt selbst dann, wenn die Energieübertragungsvorrichtung bzw. die Kopplungsvorrichtung verkleidet bzw. in die Reinigungslanze integriert sind. Der Benutzer wird dann indirekt dazu angeleitet bzw. gezwungen, die Reinigungslanze in die Koppelstellung zu bringen, so dass die Aufladung zuverlässig erfolgen kann.

Eine derartige Einführhilfe kann vorteilhaft dadurch bereitgestellt werden, dass der erste Anschlag der Kopplungsvorrichtung als sich in Einführrichtung der Reinigungslanze verengender Innenkegelabschnitt und der zweite Anschlag als sich in Einschubrichtung verjüngender Außenkegelabschnitt ausgebildet sind, wobei der größere Durchmesser des Außenkegelabschnitts größer ist als der kleinere Durchmesser des Innenkegelabschnitts. Die Einführhilfe kann aber auch auf andere Weise bereitgestellt werden, z. B. durch einen trichterförmigen bzw. einen sich konisch nach unten verjüngenden Einführbereich der Haltevorrichtung.

Die Reinigungsvorrichtung kann nicht nur in Fahrzeugwaschanlagen verwendet werden, sondern vorteilhaft auch in anderen Bereichen, in denen eine Flüssigkeit aus einer Reinigungslanze oder ähnlichen Vorrichtung versprüht wird und diese eine eigenständige Energieversorgung enthalten, beispielsweise bei Hochdruckreinigern.

Weitere Besonderheiten und Vorzüge der Erfindung ergeben sich aus der folgenden Beschreibung eines bevorzugten Ausführungsbeispiels anhand der beiliegenden Zeichnungen. Diese zeigen:
- **Fig. 1**: eine schematische Schnittansicht einer erfindungsgemäßen Reinigungsvorrichtung mit einer Reinigungslanze;
- **Fig. 2**: die Reinigungslanze;

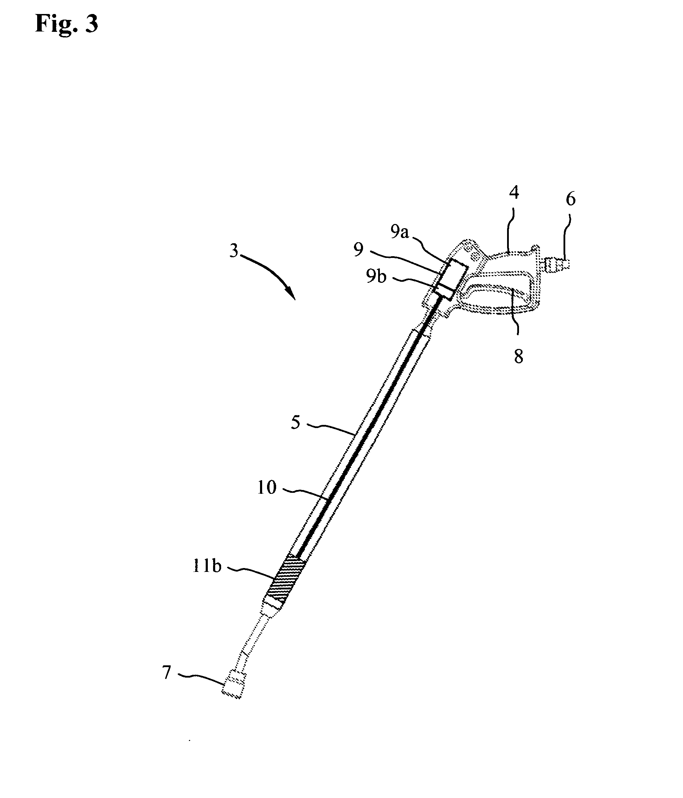

- **Fig. 3**: eine Haltevorrichtung der Reinigungsvorrichtung aus Fig. 1;
- **Fig. 4**: eine Detailansicht einer ersten Ausführung einer Kopplungsvorrichtung der erfindungsgemäßen Reinigungsvorrichtung;
- **Fig. 5**: eine Detailansicht einer zweiten Ausführung der Kopplungsvorrichtung;
- **Fig. 6**: eine Detailansicht einer dritten Ausführung der Kopplungsvorrichtung;
- **Fig. 7**: eine Detailansicht einer vierten Ausführung der Kopplungsvorrichtung.

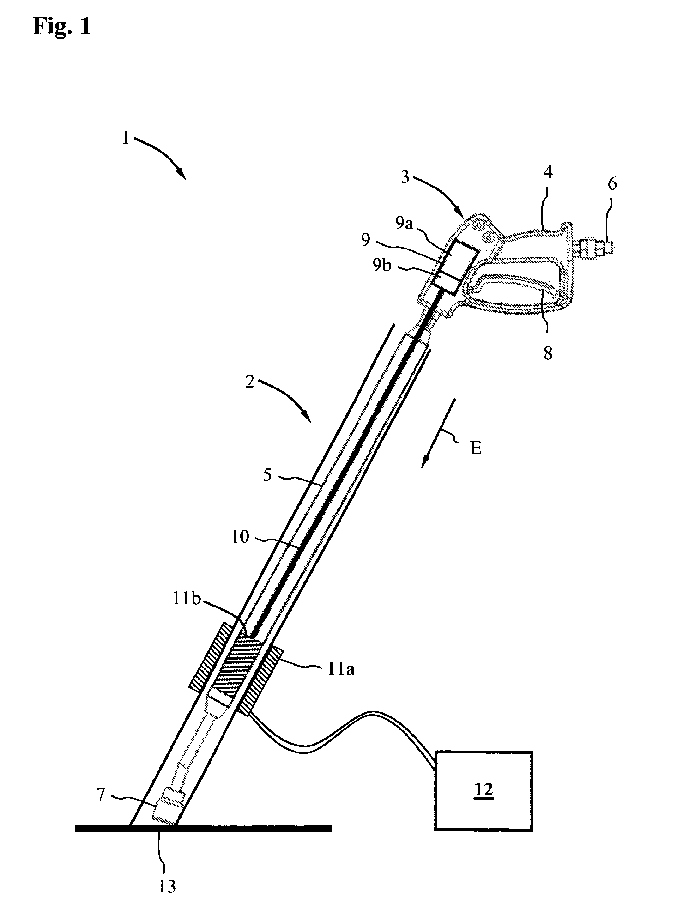

Fig. 1 zeigt eine erfindungsgemäße Reinigungsvorrichtung 1 mit einer köcherartigen Haltevorrichtung 2 für eine Reinigungslanze 3. Im unbenutzten Zustand wird die Reinigungslanze 3 in Einführrichtung E in die Haltevorrichtung 2 eingesteckt und dort aufbewahrt. Anstelle der hier als geschlossenes, langes Rohr ausgeführten Haltevorrichtung 2 kann die Haltevorrichtung 2 auch als ein kurzes und/oder teilweise geöffnetes Rohr oder in Form einer Einklipphalterung ausgebildet sein. Auch kann die Haltevorrichtung 2 senkrecht oder mit einer anderen Neigung als der in Fig. 1 gezeigten angeordnet sein. Bei einer Ausbildung als Einklipphalterung kann die Reinigungslanze 3 seitlich in die Haltevorrichtung 2 eingeklippt werden.

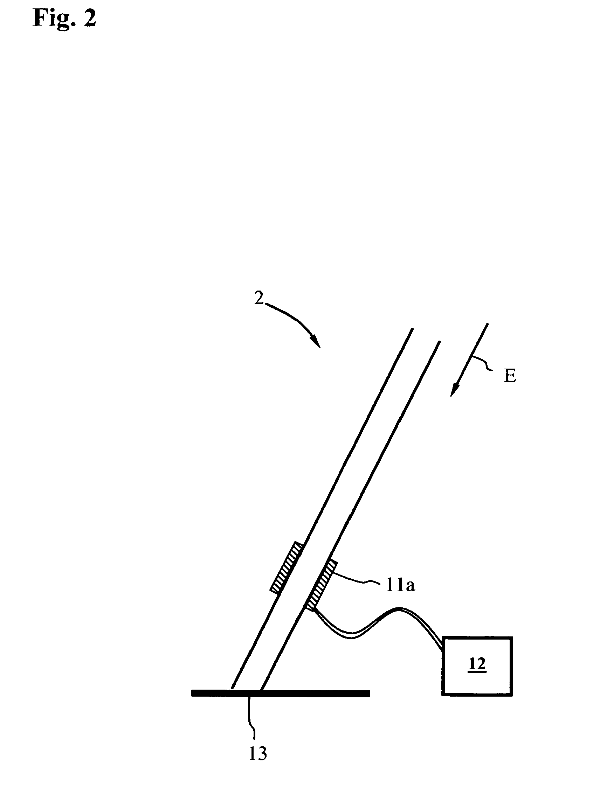

Die in Fig. 2 dargestellte Reinigungslanze 3 entspricht im Wesentlichen dem Aufbau und der Konstruktion an sich bekannter Reinigungslanzen mit einem Handgriff 4 und einem lanzenförmigen Strahlrohr 5. Der Handgriff 4 wird mittels eines Hochdruckanschluss 6 an einen nicht gezeichneten Schlauch mit einer Pumpeneinheit verbunden. Am vorderen Ende des Strahlrohrs 5 ist eine Reinigungsdüse 7 angebracht, aus der von der Pumpeneinheit gefördertes Wasser bzw. Reinigungsflüssigkeit auf die zu waschenden Fahrzeugoberflächen gesprüht bzw. gespritzt werden kann, gegebenenfalls auch unter Hochdruck. Die Flüssigkeitsabgabe der Reinigungslanze 3 kann über einen Abzugshebel 8 freigegeben oder gesperrt werden.

Um im Handgriff 4 der Reinigungslanze 3 vorgesehene elektrische Verbraucher, beispielsweise eine Druckanzeige, eine Wählvorrichtung, eine Sende-/Empfängereinheit oder eine Sicherheitsüberwachungseinrichtung mit elektrischer Energie zu versorgen, ist in der Reinigungslanze 3 eine Energieversorgungseinheit 9 vorgesehen, welche einen als wiederaufladbaren Akkumulator 9a ausgebildeten elektrischen Energiespeicher und ein Ladegerät 9b für diesen enthält.

Zum Laden des Akkumulators 9a ist das Ladegerät 9b über eine Leitung 10 mit einer am vorderen Ende des Lanzenteils 5 angeordneten Sekundärspulenwicklung 11b verbunden. Die Sekundärspulenwicklung 11b bildet zusammen mit einer an der Haltevorrichtung 2 angeordneten Primärspulenwicklung 11a eine als Transformator 11 ausgebildete berührungslose elektrische Energieübertragungseinheit. Die Primärspulenwicklung 11a wird durch eine elektrische Energieversorgungseinheit 12 mit elektrischer Energie, hier Wechselspannung, versorgt. Sowohl die Primärspulenwicklung 11a als auch die Sekundärspulenwicklung 11b sind auf einem die Magnetfeldlinien führenden Kern, hier einem ringförmigen Eisenkern, gewickelt und nach außen durch eine Ummantelung oder ein Gehäuse geschützt. Die Spulenwicklungen 11a und 11b können auch jeweils in ein Kunststoffgehäuse vergossen sein.

Die Ladung des Akkumulators 9a über das Ladegerät 9b und den Transformator 11 erfolgt, wenn die Reinigungslanze 3 in die Haltevorrichtung 2 eingesteckt ist, wie in Fig. 1 dargestellt. In dieser Koppelstellung umgreift die Primärspulenwicklung 11a die an der Reinigungslanze 3 angeordnete Sekundärspulenwicklung 11b. Um eine möglichst gute magnetische Kopplung zwischen den Spulenwicklungen 11a und 11b des Transformators 11 sicherzustellen, steht im vorliegenden Ausführungsbeispiel die Reinigungsdüse 7 auf dem Boden 13 der Haltevorrichtung 2 auf Die Spulenwicklungen 11a und 11b befinden sich somit in unmittelbarer räumlicher Nähe zueinander, wodurch eine gute magnetische Kopplung erreicht wird.

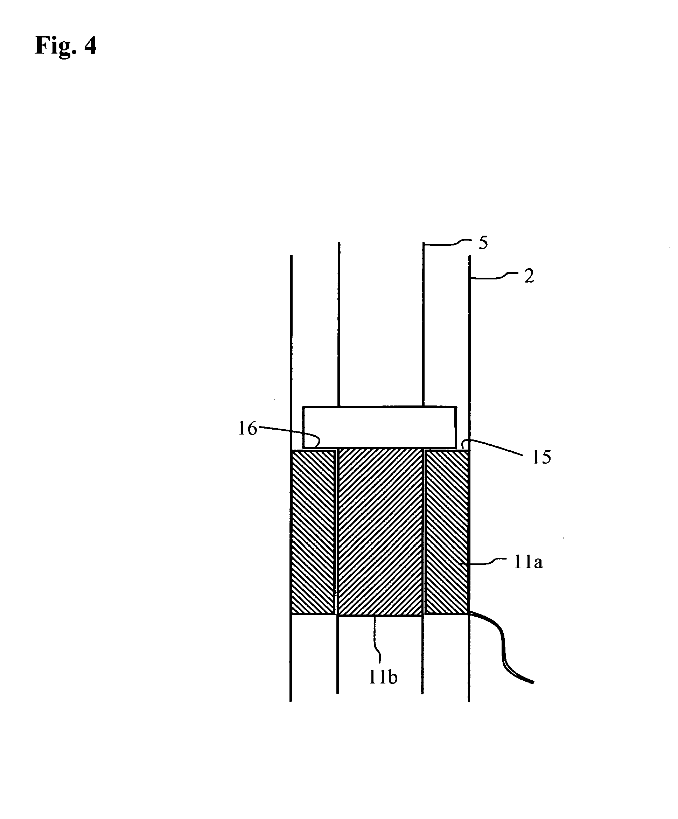

In einer alternativen Ausgestaltung der Reinigungsvorrichtung 1 ist eine Kopplungsvorrichtung 14 vorgesehen, welche dafür sorgt, dass die Spulenwicklungen 11a, 11b in einer für die magnetische Kopplung optimalen räumlichen Koppelstellung der in die Haltevorrichtung 2 eingesteckten Reinigungslanze 3 zueinander gehalten werden. Unterschiedliche Ausgestaltungen der Kopplungsvorrichtung 14 sind in Fig. 4 bis 7 gezeigt. Nachfolgende werden nur die für die Kopplungsvorrichtung 14 maßgeblichen Unterschiede beschrieben. Gleiche Teile wie in den vorangehenden Ausführungen und Zeichnungen tragen gleiche Bezugszeichen.

In Fig. 4 ist die Primärspulenwicklung 11a ringförmig an der Innenwandung der köcherförmigen Haltevorrichtung 2 angeordnet und bildet an ihrem einführseitigen Ende einen kreisringförmigen Anschlag 15. Die Sekundärspulenwicklung 11b auf dem Strahlrohr 5 unterscheidet sich nicht von der oben beschriebenen. Direkt oberhalb der Sekundärspulenwicklung 11b ist ein kreisringförmiger Anschlag 16 am Strahlrohr 5 angebracht, dessen Außendurchmesser größer ist als der Innendruchmesser der Primärspulenwicklung 11a bzw. deren Ummantelung. Im eingesetzten Zustand liegt folglich der Anschlag 16 der Sekundärspulenwicklung 11b auf dem Anschlag 15 der Primärspulenwicklung 11a auf. Hierdurch wird sichergestellt, dass die Spulenwicklungen 11a und 11b in der Koppelstellung räumlich möglichst nahe zueinander zu liegen kommen, um eine möglichst gute magnetische Kopplung und somit induktive elektrische Energieübertragung sicherzustellen.

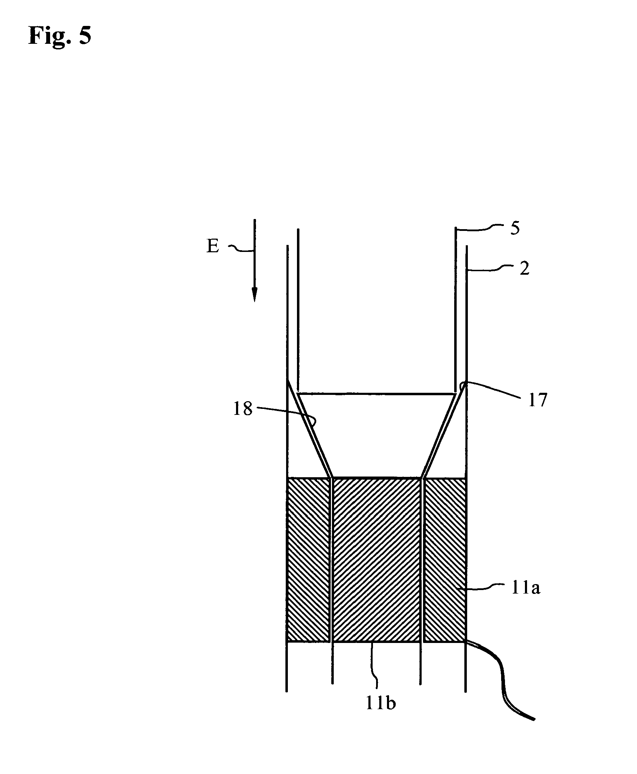

In Fig. 5 sind die Spulenwicklungen 11a, 11b identisch zu den in Fig. 4 dargestellten ausgebildet. Die Kopplungsvorrichtung 14 weist an der Haltevorrichtung 2 einen sich in Einführrichtung E der Reinigungslanze 3 nach innen verengenden Innenkegelabschnitt 17 als Anschlag auf. Das Strahlrohr 5 hat direkt oberhalb der Sekundärspulenwicklung 11a einen Außenkegelabschnitt 18, welcher an den kegelförmigen Innenkegelabschnitt 17 angepasst ist. Durch die korrespondierenden Innen- bzw. Außenkegelformen bilden der Innenkegelabschnitt 17 und der Außenkegelabschnitt 18 zusätzlich eine Einführhilfe, um die Reinigungslanze 2 und somit das Strahlrohr 5 möglichst sicher in die hier gezeigte, für die magnetische Kopplung günstige Koppelstellung einführen zu können.

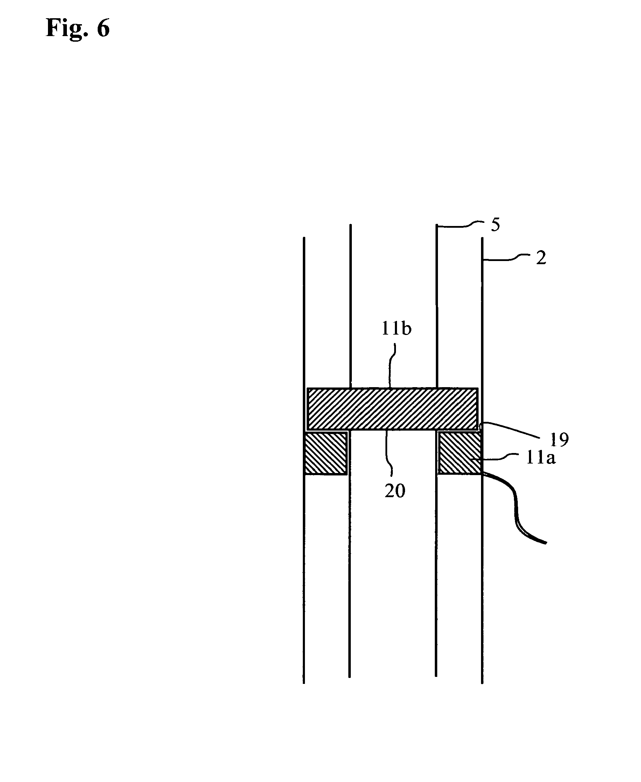

Bei der in Fig. 6 gezeigten Kopplungsvorrichtung 14 ist die Primärspulenwicklung 11a kreisringförmig an der Innenwandung der köcherförmigen Haltevorrichtung 2 angeordnet und bildet gleichzeitig einführseitig einen kreisringförmigen Anschlag 19. Die Sekundärspulenwicklung 11b umgreift das Strahlrohr 5 ringförmig und bildet gleichzeitig einen kreisringförmigen Anschlag 20 mit größerem Außendurchmesser als der Innendurchmesser der Primärspulenwicklung 11a. Der Anschlag 20 kommt in der Koppelstellung der Reinigungslanze 3 auf dem Anschlag 19 der Primärspulenwicklung 11a zu liegen. Diese Ausgestaltung weist bei relativ kleinen Abmessungen eine gute magnetische Kopplung auf. Auch lassen sich bestehende Reinigungsvorrichtungen einfach nachrüsten.

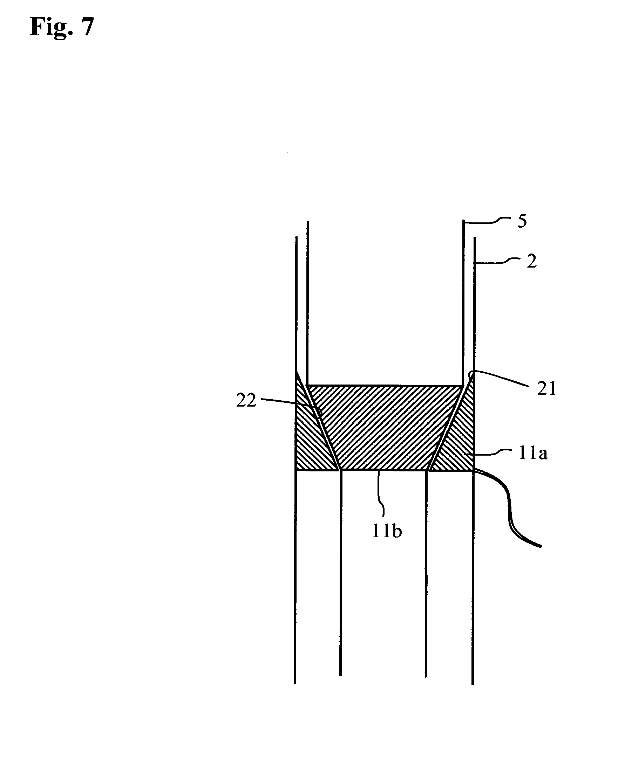

Wie bei der in Fig. 6 gezeigten Ausführung wird auch bei der in Fig. 7 gezeigten Ausführung die Kopplungsvorrichtung 14 durch die Spulenwicklungen 11a und 11b gebildet. Diese Ausführung unterscheidet sich von der in Fig. 5 gezeigten im wesentlichen dadurch, dass hier die Spulenwicklung 11a als sich in Einführrichtung E nach innen verengender, einen Anschlag bildender Innenkegel 21 ausgebildet und die Sekundärspulenwicklung 11a in einen als Anschlag dienenden Außenkegelabschnitt 22 des Strahlrohrs 5 integriert ist. Zusätzlich zu den Vorteilen der in Fig. 5 gezeigten Ausführung ist die vorliegende Ausführung platz- und materialsparend ausgebildet.

Da die Benutzer der Reinigungslanze 3 diese nach der Benutzung in der Regel wieder in die Haltvorrichtung 2 zurückstecken, kann auf einfache Weise gerade bei längerer Nichtbenutzung der Reinigungslanze 3 eine zuverlässige Ladung des Akkumulators 9b sichergestellt werden. Sind die Spulenwicklungen 11a und/oder 11b in ein Kunststoffgehäuse vergossen, so sind die Anschläge 16, 19, 20, 21 und 22 einfach herzustellen und dennoch robust und feuchtigkeitsgeschützt.

## Patentansprüche

1. Reinigungsvorrichtung (1) mit einer Reinigungslanze (3) und einer Haltevorrichtung (2) zum Aufbewahren der Reinigungslanze (3), welche einen wiederaufladbaren elektrischen Energiespeicher (9a) zur Versorgung von elektrischen Verbrauchern der Reinigungslanze (3) und eine Ladevorrichtung (9b) zum Aufladen des Energiespeichers (9a) enthält, **dadurch gekennzeichnet, dass** die Reinigungsvorrichtung (1) eine elektrische Energieübertragungseinheit (11) zum berührungslosen Übertragen von elektrischer Energie zwischen der Haltevorrichtung (2) und der Ladevorrichtung (9b) für das Aufladen des Energiespeichers (9a) aufweist.

2. Reinigungsvorrichtung (1) nach Anspruch 1, **dadurch gekennzeichnet, dass** die Energieübertragungseinheit (11) ein Transformator mit einer an der Haltevorrichtung (2) angeordneten Primärspulenwicklung (11a) und einer an der Reinigungslanze (3) angeordneten Sekundärspulenwicklung (11b) ist.

3. Reinigungsvorrichtung (1) nach Anspruch 1 oder 2, **dadurch gekennzeichnet, dass** die Haltevorrichtung (2) einen Köcher zum Einstecken eines länglichen Strahlrohrs (5) der Reinigungslanze (3) aufweist.

4. Reinigungsvorrichtung (1) nach Anspruch 3, **dadurch gekennzeichnet, dass** sich der Köcher der Haltevorrichtung (2) konisch nach unten verengt.

5. Reinigungsvorrichtung (1) nach einem der voranstehenden Ansprüche, **dadurch gekennzeichnet, dass** eine Kopplungsvorrichtung (14) die in die Haltevorrichtung (2) eingesteckte Reinigungslanze (3) in einer Kopplungsstellung hält, in der eine zum Aufladen des Energiespeichers (11) ausreichende magnetische Kopplung zwischen der Haltevorrichtung (2) und der Ladevorrichtung (9b) besteht.

6. Reinigungsvorrichtung (1) nach Anspruch 5, **dadurch gekennzeichnet, dass** die Primärspulenwicklung (11a) und Sekundärspulenwicklung (11b) in der Kopplungsstellung in räumlicher Nähe zueinander angeordnet sind.

7. Reinigungsvorrichtung (1) nach Anspruch 5 oder 6, **dadurch gekennzeichnet, dass** die Kopplungsvorrichtung (14) die Primärspulenwicklung (11a) und/oder die Sekundärspulenwicklung (11b) enthält.

8. Reinigungsvorrichtung (1) nach einem der Ansprüche 4 bis 6, **dadurch gekennzeichnet, dass** die Kopplungsvorrichtung (14) einen ersten Anschlag an der Haltevorrichtung (2) und einen zweiten Anschlag (16; 18; 20; 22) an der Reinigungslanze (3) aufweist, und die Anschläge (16, 17; 18, 19; 20, 21; 22, 23) die Reinigungslanze (3) in der Kopplungsstellung in der Haltevorrichtung (2) halten.

9. Reinigungsvorrichtung (1) nach Anspruch 8, **dadurch gekennzeichnet, dass** der erste Anschlag (19; 21) durch die Primärspulenwicklung (11a) und/oder der zweite Anschlag (20; 22) durch die Sekundärspulenwicklung (11b) gebildet sind.

10. Reinigungsvorrichtung (1) nach Anspruch 9, **dadurch gekennzeichnet, dass** der erste Anschlag (15; 19) und der zweite Anschlag (16; 20) kreisringförmig ausgebildet sind, wobei der Innendurchmesser des ersten Anschlags (15; 19) kleiner ist als der Außendurchmesser des zweiten Anschlags (16; 20).

11. Reinigungsvorrichtung (1) nach Anspruch 9, **dadurch gekennzeichnet, dass** der erste Anschlag als sich in Einführrichtung (E) der Reinigungslanze (3) verengender Innenkegelabschnitt (17; 21) und der zweite Anschlag als sich in Einschubrichtung (E) verjüngender Außenkegelabschnitt (18; 22) ausgebildet sind, wobei der größere Durchmesser des Außenkegelabschnitts (18; 22) größer ist als der kleinere Durchmesser des Innenkegelabschnitts (17; 21).

12. Reinigungsvorrichtung (1) nach einem der voranstehenden Ansprüche, **dadurch gekennzeichnet, dass** eine Einführhilfe (17, 18; 21, 22) zum Einführen der Reinigungslanze (3) in die Haltevorrichtung (2) in die Kopplungsstellung vorgesehen ist.

## Claims

1. Cleaning apparatus (1) having a cleaning lance (3) and holding device (2) for keeping the cleaning lance (3), which contains a rechargeable electrical energy storing device (9a) for supplying electrical appliances of the cleaning lance (3) and a charging device (9b) for charging the energy storing device (9a), **characterised in that** the cleaning apparatus (1) has an electrical energy transmitting unit (11) for the contactless transmission of electrical energy between the holding device (2) and the charging device (9b) for charging the energy storing device (9a).

2. Cleaning apparatus (1) according to claim 1, **characterised in that** the energy transmitting unit (11) is a transformer with a primary coil winding (11a) disposed on the holding device (2) and a secondary coil winding (11b) disposed on the cleaning lance (3).

3. Cleaning apparatus (1) according to claim 1 or 2, **characterised in that** the holding device (2) has a holster for inserting an elongate jet pipe (5) of the cleaning lance (3).

4. Cleaning apparatus (1) according to claim 3, **characterised in that** the holster of the holding device (2) narrows conically downwardly.

5. Cleaning apparatus (1) according to one of the preceding claims, **characterised in that** a coupling device (14) keeps the cleaning lance (3) inserted in the holding device (2) in a coupling position in which there is magnetic coupling between the holding device (2) and the charging device (9b) which is sufficient to charge the energy storing device (11).

6. Cleaning apparatus (1) according to claim 5, **characterised in that** the primary coil winding (11a) and secondary coil winding (11b) in the coupling position are disposed in the spatial vicinity of each other.

7. Cleaning apparatus (1) according to claim 5 or 6, **characterised in that** the coupling device (14) contains the primary coil winding (11a) and/or the secondary coil winding (11b).

8. Cleaning apparatus (1) according to one of claims 4 to 6, **characterised in that** the coupling device (14) has a first stop on the holding device (2) and a second stop (16; 18; 20; 22) on the cleaning lance (3), and the stops (16,17; 18, 19; 20, 21; 22, 23) keep the cleaning lance (3) in the coupling position in the holding device (2).

9. Cleaning apparatus (1) according to claim 8, **characterised in that** the first stop (19; 21) is formed by the primary coil winding (11a) and/or the second stop (20; 22) is formed by the secondary coil winding (11b).

10. Cleaning apparatus (1) according to claim 9, **characterised in that** the first stop (15; 19) and the second stop (16; 20) are ring-shaped, wherein the inside diameter of the first stop (15; 19) is smaller than the outside diameter of the second stop (16; 20).

11. Cleaning apparatus (1) according to claim 9, **characterised in that** the first stop is designed as an inner cone section (17; 21) narrowing in the direction of insertion (E) of the cleaning lance (3), and the second stop is designed as an outer cone section (18; 22) tapering in the direction of insertion (E), wherein the larger diameter of the outer cone section (18; 22) is larger than the smaller diameter of the inner cone section (17; 21).

12. Cleaning apparatus (1) according to one of the preceding claims, **characterised in that** an insertion aid (17, 18; 21, 22) is provided for inserting the cleaning lance (3) in the holding device (2) in the coupling position.

## Revendications

1. Dispositif de nettoyage (1) comprenant une lance de nettoyage (3) et un dispositif de maintien (2) servant à conserver la lance de nettoyage (3), qui contient un accumulateur d'énergie (9a) électrique rechargeable servant à l'alimentation de consommateurs électriques de la lance de nettoyage (3) et un dispositif de chargement (9b) servant à charger l'accumulateur d'énergie (9a), **caractérisé en ce que** le dispositif de nettoyage (1) présente une unité de transmission d'énergie (11) servant à transmettre sans contact une énergie électrique entre le dispositif de maintien (2) et le dispositif de charge (9b) en vue du chargement de l'accumulateur d'énergie (9a).

2. Dispositif de nettoyage (1) selon la revendication 1, **caractérisé en ce que** l'unité de transmission d'énergie (11) est un transformateur pourvu d'un enroulement de bobine primaire (11a) disposé au niveau du dispositif de maintien (2) et d'un enroulement de bobine secondaire (11b) disposé au niveau de la lance de nettoyage (3).

3. Dispositif de nettoyage (1) selon la revendication 1 ou 2, **caractérisé en ce que** le dispositif de maintien (2) présente un fourreau servant à insérer un tuyau de projection (5) allongé de la lance de nettoyage (3).

4. Dispositif de nettoyage (1) selon la revendication 3, **caractérisé en ce que** le fourreau du dispositif de maintien (2) se réduit de manière conique vers le bas.

5. Dispositif de nettoyage (1) selon l'une quelconque des revendications précédentes, **caractérisé en ce qu'**un dispositif de couplage (14) maintient, dans une position de couplage, la lance de nettoyage (3) insérée dans le dispositif de maintien (2), dans laquelle position de couplage un couplage magnétique servant au chargement de l'accumulateur d'énergie (11) existe entre le dispositif de maintien (2) et le dispositif de charge (9b).

6. Dispositif de nettoyage (1) selon la revendication 5, **caractérisé en ce que** l'enroulement de bobine primaire (11a) et l'enroulement de bobine secondaire (11b) sont disposés l'un par rapport à l'autre selon une proximité spatiale dans la position de couplage.

7. Dispositif de nettoyage (1) selon la revendication 5 ou 6, **caractérisé en ce que** le dispositif de couplage (14) contient l'enroulement de bobine primaire (11a) et/ou l'enroulement de bobine secondaire (11b).

8. Dispositif de nettoyage (1) selon l'une quelconque des revendications 4 à 6, **caractérisé en ce que** le dispositif de couplage (14) présente une première butée au niveau du dispositif de maintien (2) et une deuxième butée (16 ; 18 ; 20 ; 22) au niveau de la lance de nettoyage (3), et **en ce que** les butées (16, 17 ; 18, 19 ; 20, 21 ; 22, 23) maintiennent la lance de nettoyage (3) dans la position de couplage dans le dispositif de maintien (2).

9. Dispositif de nettoyage (1) selon la revendication 8, **caractérisé en ce que** la première butée (19 ; 21) est formée par l'enroulement de bobine primaire (11a), et/ou **en ce que** la deuxième butée (20 ; 22) est formée par l'enroulement de bobine secondaire (11b).

10. Dispositif de nettoyage (1) selon la revendication 9, **caractérisé en ce que** la première butée (15 ; 19) et la deuxième butée (16 ; 20) sont réalisées de manière à présenter une forme annulaire circulaire, sachant que le diamètre intérieur de la première butée (15 ; 19) est plus petit que le diamètre extérieur de la deuxième butée (16 ; 20).

11. Dispositif de nettoyage (1) selon la revendication 9, **caractérisé en ce que** la première butée est réalisée sous la forme d'une section de cône interne (17 ; 21) se rétrécissant dans la direction d'introduction (E) de la lance de nettoyage (3), et **en ce que** la deuxième butée est réalisée sous la forme d'une section de cône externe (18 ; 22) se rétrécissant dans la direction d'insertion par glissement (E), sachant que le diamètre le plus grand de la section de cône externe (18 ; 22) est plus grand que le diamètre plus petit de la section de cône interne (17 ; 21).

12. Dispositif de nettoyage (1) selon l'une quelconque des revendications précédentes, **caractérisé en ce qu'**un système d'aide à l'introduction (17, 18 ; 21, 22) est prévu aux fins de l'introduction de la lance de nettoyage (3) dans le dispositif de maintien (2) dans la position de couplage.
